(19) Europäisches Patentamt
European Patent Office
Office européen des brevets

(11) **EP 4 507 125 A1**

(12) **EUROPEAN PATENT APPLICATION**
published in accordance with Art. 153(4) EPC

(43) Date of publication:
**12.02.2025 Bulletin 2025/07**

(21) Application number: 23778398.0

(22) Date of filing: **30.03.2023**

(51) International Patent Classification (IPC):
**H01Q 1/50** $^{(2006.01)}$       **H01Q 5/50** $^{(2015.01)}$
**H01Q 21/00** $^{(2006.01)}$

(52) Cooperative Patent Classification (CPC):
Y02D 30/70

(86) International application number:
**PCT/CN2023/085198**

(87) International publication number:
**WO 2023/186033 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.04.2022 CN 202210347408**

(71) Applicant: **Vivo Mobile Communication Co., Ltd.
Dongguan, Guangdong 523863 (CN)**

(72) Inventors:
• **YANG, Wannian
  Dongguan, Guangdong 523863 (CN)**
• **XIE, Shengxu
  Dongguan, Guangdong 523863 (CN)**
• **WANG, Yijin
  Dongguan, Guangdong 523863 (CN)**

(74) Representative: **Lavoix
Bayerstraße 83
80335 München (DE)**

(54) **ULTRA-WIDEBAND ANTENNA ARRAY AND ELECTRONIC DEVICE**

(57) This application discloses an ultra-wideband antenna array and an electronic device, and belongs to the field of electronic product technologies. The antenna array includes a first antenna unit, a second antenna unit, and a third antenna unit, where a first distance and a second distance are less than a third distance. The first distance is a distance between the first antenna unit and the third antenna unit, the second distance is a distance between the second antenna unit and the third antenna unit, and the third distance is a distance between the first antenna unit and the second antenna unit. Phase centers of the first antenna unit, the second antenna unit, and the third antenna unit are deviated from geometric centers.

FIG. 3

## Description

## CROSS-REFERENCE TO RELATED APPLICATION

This application claims priority to Chinese Patent Application No. 202210347408.0, filed with the China on April 1, 2022, which is incorporated herein by reference in its entirety.

## TECHNICAL FIELD

This application belongs to the field of electronic product technologies, and specifically, relates to an ultra-wideband antenna array and an electronic device.

## BACKGROUND

With development of a 5th generation mobile communication technology (5th Generation Mobile Communication Technology, 5G), an era of the Internet of everything is approaching, and users have more functional requirements for electronic devices, and put forward higher requirements for convenience and intelligence. One of important applications, for example, indoor positioning or object finding, is introduced into an electronic device, and this function is implemented by using an ultra-wideband (Ultra Wide Band, UWB) technology. If a good experience effect needs to be obtained in the technology, a high requirement is put forward for antenna performance, including a high antenna bandwidth, a stable phase characteristic, a spatial stable group delay (Group Delay), a good response characteristic fidelity factor (Fidelity Factor), and the like. To obtain the foregoing good characteristics, in addition to design of a specific antenna, a proper arrangement is needed, and a material process characteristic of the antenna also needs to be considered together.

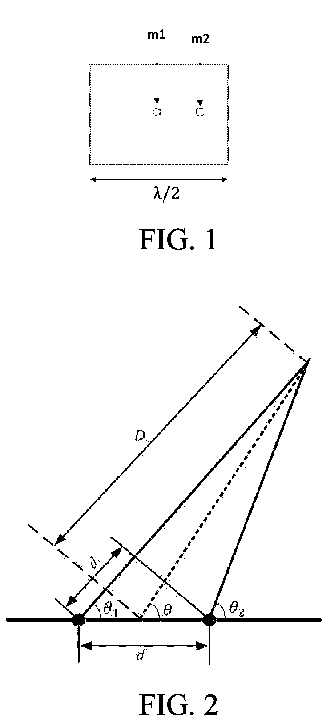

To obtain good angle measurement precision and a long ranging distance, high requirements are put forward for antenna performance and space disposition. In an existing UWB antenna solution, a UWB antenna is usually designed by using a half-wavelength patch antenna. As shown in FIG. 1, a phase center of the half-wavelength patch antenna is generally not much different from a geometric center in terms of position (in FIG. 1, m1 is the phase center, and m2 is a feed point). In addition, to obtain good angle measurement precision, a distance between antennas generally needs to be near a half wavelength, that is, a phase center distance is near the half wavelength.

In the foregoing solution, a large antenna size and a large distance between antennas are required. Therefore, there is a problem that the entire UWB antenna occupies large space. However, because a quantity and occupied space of camera modules in a terminal increase, and a quantity and occupied space of cellular antennas or non-cellular antennas increase, small space is reserved for the UWB antenna. Therefore, the existing UWB antenna solution usually cannot be used in a terminal because of large occupied space.

## SUMMARY

An objective of embodiments of this application is to provide an ultra-wideband antenna array and an electronic device, to resolve a problem that occupied space is large in an existing UWB antenna solution.

To resolve the foregoing technical problem, this application is implemented as follows:

According to a first aspect, an embodiment of this application provides an ultra-wideband antenna array, including a first antenna unit, a second antenna unit, and a third antenna unit, where a first distance and a second distance are less than a third distance. The first distance is a distance between the first antenna unit and the third antenna unit, the second distance is a distance between the second antenna unit and the third antenna unit, and the third distance is a distance between the first antenna unit and the second antenna unit. Phase centers of the first antenna unit, the second antenna unit, and the third antenna unit are deviated from geometric centers.

According to a second aspect, an embodiment of this application provides an electronic device, including the ultra-wideband antenna array according to the first aspect.

In the embodiments of this application, the ultra-wideband antenna array includes the first antenna unit, the second antenna unit, and the third antenna unit, and the third antenna unit is separately adjacent to the first antenna unit and the second antenna unit. The phase centers of the first antenna unit, the second antenna unit, and the third antenna unit are deviated from the geometric centers. In this way, positions at which the first antenna unit, the second antenna unit, and the third antenna unit are disposed can be properly adjusted based on an internal environment of the electronic device, so that a phase center distance between two antenna units can be less than a geometric center distance, and the two antenna units can be arranged more closely, thereby reducing occupied space of the ultra-wideband antenna array. In this way, a problem that occupied space is large in an existing UWB antenna solution is resolved, and it can be ensured that the ultra-wideband antenna array has good antenna performance and good angle measurement precision.

## BRIEF DESCRIPTION OF THE DRAWINGS

FIG. 1 is a schematic diagram of a half-wavelength patch antenna;
FIG. 2 is a schematic diagram of angle measurement;
FIG. 3 is a schematic diagram 1 of a structure of an ultra-wideband antenna array according to an embodiment of the present invention;

FIG. 4 is a schematic diagram 2 of a structure of an ultra-wideband antenna array according to an embodiment of the present invention;

FIG. 5 is a schematic diagram 3 of a structure of an ultra-wideband antenna array according to an embodiment of the present invention;

FIG. 6 is a schematic diagram 4 of a structure of an ultra-wideband antenna array according to an embodiment of the present invention;

FIG. 7 is a schematic diagram 5 of a structure of an ultra-wideband antenna array according to an embodiment of the present invention;

FIG. 8 is a schematic diagram 6 of a structure of an ultra-wideband antenna array according to an embodiment of the present invention;

FIG. 9 is a schematic diagram of a planar inverted F antenna according to an embodiment of the present invention;

FIG. 10 is a schematic diagram 1 of a structure of an electronic device according to an embodiment of the present invention;

FIG. 11 is a schematic diagram 2 of a structure of an electronic device according to an embodiment of the present invention;

FIG. 12 is a schematic diagram 3 of a structure of an electronic device according to an embodiment of the present invention;

FIG. 13 is a schematic diagram of a mainboard bracket according to an embodiment of the present invention;

FIG. 14 is a schematic diagram 4 of a structure of an electronic device according to an embodiment of the present invention; and

FIG. 15 is a schematic diagram 5 of a structure of an electronic device according to an embodiment of the present invention.

Description of reference signs:

10-electronic device; 11-display; 12-rear housing; 13-middle housing; 14-camera module; 15-breakpoint; 16-mainboard bracket; 17-ultra-wideband antenna array; 17al-first antenna unit; 17a2-second antenna unit; 17a3-third antenna unit; 17b1-first feed contact point; 17b2-second feed contact point; 17b3-third feed contact point; 17c1-first ground hole; 17c2-second ground hole; 17c3-third ground hole; 17d-metallic ground; 17e1-first feed signal cable; 17e2-second feed signal cable; 17e3-third feed signal cable; 17f-contact point; 17g1-first phase center; 17g2-second phase center; 17g3-third phase center; 17h1-first open slot; 17h2-second open slot; 17h3-third open slot; 17il-first region; 17i2-second region; 17i3-third region; 17f-contact point; 18-mainboard; 19-shielding can; 20-board-to-board connector (Board-To-Board Connectors, BTB); L1-first structure layer; L2-second structure layer; L3-third structure layer.

## DETAILED DESCRIPTION

The following clearly and completely describes the technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The terms such as "first" and "second" in the specification and claims of this application are intended to distinguish between similar objects, and are not intended to describe a specific order or sequence. It should be understood that the data termed in such a way is interchangeable in proper circumstances, so that embodiments of this application can be implemented in an order other than the order illustrated or described herein. In addition, "and/or" in the specification and claims represents at least one of connected objects. The character "/" generally represents an "or" relationship between associated objects.

With reference to FIG. 2, the following describes a case that a phase center distance between antenna units is close to a half wavelength.

When a UWB antenna is used in a mobile phone to implement angle measurement and ranging functions, an angle measurement function is based on an angle of arrival (Angle of Arrival, AOA) principle. An AOA is calculated by using a phase difference of arrival (Phase Difference Of Arrival, PDOA). Theoretically, a phase difference of the PDOA is calculated by using the following formula:

$$\Delta\varphi = \frac{360^{o}}{\lambda} d \cos\theta,$$

where
$\Delta\varphi$ is the phase difference, d is an electrical distance (a phase center distance) between antennas, $\lambda$ is an operating wavelength, and $\theta$ is an angle of an incoming wave.

Specifically, a specific derivation process of $\Delta\varphi$ is as follows:

First, when a distance D between a measured object and the terminal is greater than several wavelengths, D>>d, and it may be considered that $\theta_1 = \theta_2 = \theta$. Second, after a wavefront of the incoming wave reaches a first antenna, an extra distance $d_1 = dcos\theta$ is required to reach a second antenna. Therefore, distance $d_1 = \Delta\varphi \frac{\lambda}{360°}$. It is derived from this that phase difference $\Delta\varphi = \frac{360^{o}}{\lambda} dcos\theta$.

Further, it is derived that

$$\theta = AOA = acos(\frac{\lambda \cdot \Delta\varphi}{360° \cdot d})$$

To avoid affecting a result of the AOA, Δφ should be less than 180°. In this way, d needs to be set to

$$d < \lambda/2$$

, where λ is a wavelength corresponding to an operating frequency.

It can be learned from the foregoing that, for the UWB antenna, the angle θ of the incoming wave is calculated by using a phase difference between arrival signals of two antenna units between which a distance is d. It can be learned from the foregoing angle measurement principle that good angle measurement precision can be obtained only at a proper electrical distance (phase center distance).

With reference to the accompanying drawings, the following describes in detail an ultra-wideband antenna array provided in embodiments of this application by using specific embodiments and application scenarios thereof.

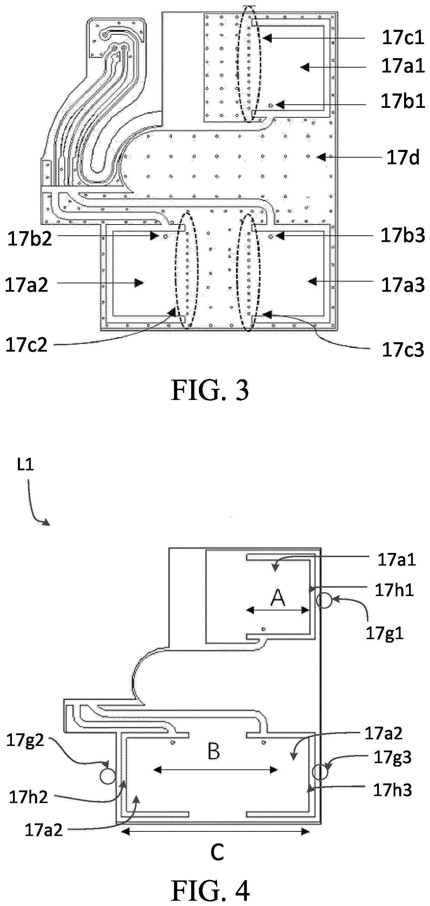

Referring to FIG. 3 to FIG. 9, an embodiment of the present invention provides an ultra-wideband antenna array, including a first antenna unit 17a1, a second antenna unit 17a2, and a third antenna unit 17a3, where a first distance and a second distance are less than a third distance. The first distance is a distance between the first antenna unit 17a1 and the third antenna unit 17a3, the second distance is a distance between the second antenna unit 17a2 and the third antenna unit 17a3, and the third distance is a distance between the first antenna unit 17a1 and the second antenna unit 17a2. Phase centers of the first antenna unit 17a1, the second antenna unit 17a2, and the third antenna unit 17a3 are deviated from geometric centers.

Optionally, the first antenna unit 17a1, the second antenna unit 17a2, and the third antenna unit 17a3 are distributed in an L shape, and the third antenna unit 17a3 is separately adjacent to the first antenna unit 17a1 and the second antenna unit 17a2.

In this embodiment, the first antenna unit 17a1, the second antenna unit 17a2, and the third antenna unit 17a3 constitute a radiation structure of the ultra-wideband antenna array. The first antenna unit 17a1 and the third antenna unit 17a3 are distributed in a first direction and are configured for vertical positioning. The second antenna unit 17a2 and the third antenna unit 17a3 are distributed in a second direction and are configured for horizontal positioning. The first direction and the second direction are perpendicular to each other, so that the first antenna unit 17a1, the second antenna unit 17a2, and the third antenna unit 17a3 are approximately distributed in an L shape. In particular, a phase center of each of the first antenna unit 17a1, the second antenna unit 17a2, and the third antenna unit 17a3 is deviated from a geometric center side of the antenna. In this way, the three antennas are properly disposed, so that a phase center distance between two antenna units can be less than a geometric center distance, and the two antenna units can be arranged more closely, thereby reducing occupied space of the ultra-wideband antenna array. In addition, the phase center distance between two antenna units is ensured, so that a PDOA characteristic between longitudinal antennas can be improved, thereby obtaining good angle measurement precision.

In an embodiment, the first antenna unit 17a1 has a first open slot 17h1, the second antenna unit 17a2 has a second open slot 17h2, the third antenna unit 17a3 has a third open slot 17h3; and a first phase center 17g1 of the first antenna unit 17a1 is located at an end at which the bottom of the first open slot 17h1 is located, a second phase center 17g2 of the second antenna unit 17a2 is located at an end at which the bottom of the second open slot 17h2 is located, and a third phase center 17g3 of the third antenna unit 17a3 is located at an end at which the bottom of the third open slot 17h3 is located.

In this embodiment, the first open slot 17h1, the second open slot 17h2, and the third open slot 17h3 are configured to radiate electromagnetic waves to the outside.

For example, as shown in FIG. 3, FIG. 4, FIG. 7, and FIG. 8, the first open slot 17h1, the second open slot 17h2, and the third open slot 17h3 each are in a horizontally placed "U" shape, and a phase center of each antenna unit is close to a "U" shape bottom end of a "U"-shaped open slot and is far away from a closed end of the antenna unit.

It should be noted that, an opening orientation of an antenna is related to a polarization direction of the antenna unit. In the foregoing example, a polarization direction of the antenna unit is set to horizontal. Therefore, the first open slot 17h1, the second open slot 17h2, and the third open slot 17h3 each are in a horizontally placed "U" shape. However, the polarization direction of the antenna unit may not be limited to horizontal according to different applications. For example, when the polarization direction of the antenna unit is vertical, the first open slot 17h1, the second open slot 17h2, and the third open slot 17h3 each are in a longitudinally placed "U" type.

In an embodiment, a phase center distance between at least two of the first antenna unit 17a1, the second antenna unit 17a2, and the third antenna unit 17a3 is greater than a geometric center distance.

That is, a phase center distance between the adjacent first antenna unit 17a1 and third antenna unit 17a3 is greater than a geometric center distance, and/or a phase center distance between the adjacent second antenna unit 17a2 and third antenna unit 17a3 is greater than a geometric center distance.

In an embodiment, an opening orientation of the second open slot 17h2 is opposite to an opening orientation of the third open slot 17h3. An opening orientation of the first open slot 17h1 is not limited.

In a preferred example, as shown in FIG. 4, the opening orientation of the first open slot 17h1 is the same as the opening orientation of the third open slot 17h3, and the opening orientation of the second open slot 17h2 is opposite to the opening orientation of the third open slot 17h3. In this way, a phase center distance between the first antenna unit 17a1 and the third antenna unit 17a3 is C, a geometric center distance between the first antenna unit 17a1 and the third antenna unit 17a3 is B, and the phase center distance is greater than the geometric center distance.

In an embodiment, an opening orientation of the first open slot 17h1 is opposite to an opening orientation of the third open slot 17h3. An opening orientation of the second open slot 17h2 is not limited.

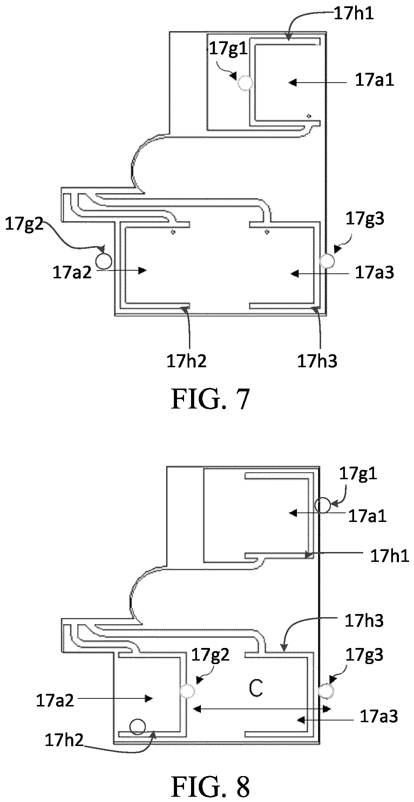

In a preferred example, as shown in FIG. 7, the opening orientation of the first open slot 17h1 is opposite to the opening orientation of the third open slot 17h3, and the opening orientation of the second open slot 17h2 is opposite to the opening orientation of the third open slot 17h3. In this way, a phase center distance between the first antenna unit 17a1 and the third antenna unit 17a3 is greater than a geometric center distance, and the phase centers of the second antenna unit 17a2 and the third antenna unit 17a3 are misaligned, so that a phase center distance between the second antenna unit 17a2 and the third antenna unit 17a3 is greater than a geometric center distance.

It should be noted that, combination statuses of the opening orientations of the antenna units in the UWB antenna array are listed in FIG. 4 and FIG. 7. However, a combination manner is not limited to the foregoing examples. A plurality of combination manners may be used, so that phase centers of at least two of the antenna units are farthest away from each other, and an opening orientation of the other antenna unit is not limited.

In the foregoing embodiments, because the phase center distance is greater than the geometric center distance, a geometric center distance between two antennas can be reduced while it is ensured that a phase center distance between the antenna units is close to a half wavelength. In this way, a physical size of the antenna can be greatly reduced, and a good PDOA characteristic can be obtained, that is, good angle measurement performance can be obtained.

In an embodiment, the first antenna unit 17a1, the second antenna unit 17a2, and the third antenna unit 17a3 each are a planar inverted F antenna (Planar Inverted F-shaped Antenna, PIFA) radiated in a quarter-wave mode.

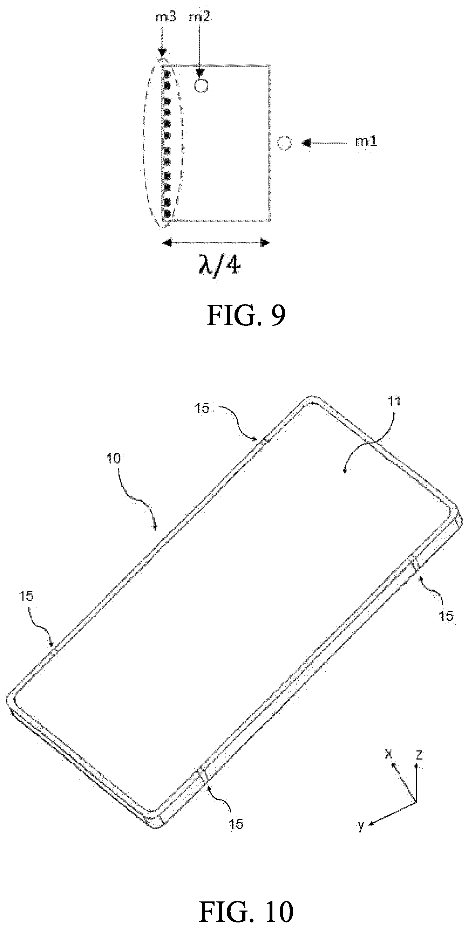

A phase center of the PIFA is located on a side of an open slot of the antenna. As shown in FIG. 9, m3 is a ground feed point of the PIFA antenna, m2 is a feed point of the PIFA antenna, and m1 is a phase center of the PIFA antenna. The phase center of the PIFA antenna is deviated from a geometric center side of the antenna, and a size of the PIFA antenna is approximately equal to a quarter wavelength ($\lambda/4$). In this way, a size of each antenna unit is half a size of a half-wavelength patch antenna.

In this embodiment, the PIFA antenna is used as the antenna unit of the ultra-wideband antenna array, so that a large phase center distance can be obtained at a small physical size while an area of the ultra-wideband antenna array is reduced. Therefore, it is ensured that the ultra-wideband antenna array has good antenna performance and good angle measurement precision.

Based on the previous embodiment, as shown in FIG. 8, the first open slot 17h1, the second open slot 17h2, and the third open slot 17h3 have the same opening orientation.

In this embodiment, the first open slot 17h1, the second open slot 17h2, and the third open slot 17h3 are disposed to have the same opening orientation. In this way, when the ultra-wideband antenna array is disposed in a terminal, openings of the first open slot 17h1, the second open slot 17h2, and the third open slot 17h3 face away from a side on which a camera module is located, so that the first phase center 17g1 corresponding to the first antenna unit 17a1, the second phase center 17g2 corresponding to the second antenna unit 17a2, and the third phase center 17g3 corresponding to the third antenna unit 17a3 are far away from the camera module, thereby reducing impact of the camera module on the antenna units.

It should be noted that the foregoing embodiment describes an optimal embodiment of a relationship between the phase centers of the first antenna unit 17a1, the second antenna unit 17a2, and the third antenna unit 17a3 and a component that has great impact on antenna performance, such as the camera module. It may be understood that phase centers of two of the three antenna units may be far away from the camera module, and an open slot of the other antenna unit may be oriented at various rotation angles, for example, upward, downward, leftward, or rightward.

In an embodiment, the ultra-wideband antenna array includes a first structure layer L1, a second structure layer L2, and a third structure layer L3 that are stacked in order.

The first antenna unit 17a1, the second antenna unit 17a2, and the third antenna unit 17a3 are disposed at the first structure layer L1. Feed signal cables of the first antenna unit 17a1, the second antenna unit 17a2, and the third antenna unit 17a3 are disposed at the second structure layer L2, and orthographic projection positions of the first antenna unit 17a1, the second antenna unit 17a2, and the third antenna unit at the second structure layer L2 are set to clearance. A reference metallic ground is disposed at the third structure layer L3.

In this embodiment, the ultra-wideband antenna array is made of a flexible circuit board, and a copper plating process or the like may be performed on a material such as a liquid crystal polymer (Liquid Crystal Polymer, LCP), modified polyimide (Modified Polyimide, MPI), or polyimide (Polyimide, PI) to form an antenna line. Specifically, the flexible circuit board is disposed as three layers of wiring: the first structure layer L1, the second structure layer L2, and the third structure layer L3. The first structure layer L1 is configured to dispose the radiation structure of the antennas, the second structure layer L2 is configured to dispose the feed signal cables of the antennas, and the third structure layer L3 is configured to dispose a complete reference metallic ground 17d.

For example, FIG. 3 shows a complete flexible circuit board, and FIG. 4 to FIG. 6 respectively show the first structure layer L1, the second structure layer L2, and the third structure layer L3 that are stacked in order from top to bottom.

As shown in FIG. 3 and FIG. 4, the radiation structure disposed at the first structure layer L1 includes the first antenna unit 17a1, the second antenna unit 17a2, and the third antenna unit 17a3. A first feed contact point 17b1 is disposed on the first antenna unit 17a1, a second feed contact point 17b2 is disposed on the second antenna unit 17a2, and a third feed contact point 17b3 is disposed on the third antenna unit 17a3.

Specifically, a plurality of first ground holes 17c1 are disposed at a closed end of the first antenna unit 17a1, a plurality of second ground holes 17c2 are disposed at a closed end of the second antenna unit 17a2, and a plurality of third ground holes 17c3 are disposed at a closed end of the third antenna unit 17a3. In this way, each antenna unit is equivalent to one PIFA antenna, and an antenna size A is approximately equal to a quarter wavelength of an antenna operating frequency and is about half a size of a half-wavelength patch antenna.

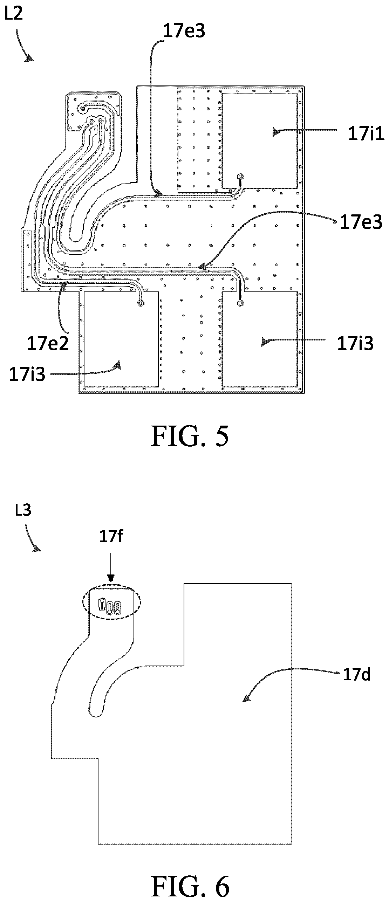

As shown in FIG. 5, the second structure layer L2 includes a first feed signal cable 17e1 of the first antenna unit 17a1, a second feed signal cable 17e2 of the second antenna unit 17a2, and a third feed signal cable 17e3 of the third antenna unit 17a3. A metallic ground 17d is disposed in a peripheral region of each feed signal cable. Orthographic projection regions (for example, a first region 17i1, a second region 17i2, and a third region 17i3 in FIG. 5) of the antenna units at the second structure layer L2 are set to clearance, and corresponding metal layers are peeled off.

As shown in FIG. 6, a complete reference metallic ground 17d is disposed at the third structure layer L3, to bind impedance of the feed signal cables, and is used as a ground of the antenna units. In addition, a contact point 17f connected to a BTB connector 20 of a mainboard is disposed at the third structure layer L3.

It should be further noted that, the first feed signal cable 17e1 is connected to the first feed contact point 17b1, the second feed signal cable 17e2 is connected to the second feed contact point 17b2, and the third feed signal cable 17e3 is connected to the third feed contact point 17b3. The connections are all implemented through perforating and copper plating between two adjacent layers. Metallic ground layers of the first structure layer L1, the second structure layer L2, and the third structure layer L3 are connected through copper plating on a plurality of through-holes.

In an embodiment, a metallic ground is disposed between two adjacent antenna units of the first antenna unit 17a1, the second antenna unit 17a2, and the third antenna unit 17a3.

In this embodiment, the metallic ground 17d is disposed between two adjacent antenna units, so that isolation between two adjacent antenna units can be improved.

Referring to FIG. 10 to FIG. 15, an embodiment of the present invention further provides an electronic device 10, including the ultra-wideband antenna array 17 described above.

The electronic device includes but is not limited to a mobile phone, a tablet computer, a notebook computer, a palm computer, an in-vehicle terminal device, a wearable device, a pedometer, or the like.

A wireless communication circuit may be disposed in the electronic device, and the wireless communication circuit may be configured to support wireless communication in a plurality of wireless communication frequency bands. A communication frequency band (sometimes referred to as a frequency band in this specification) processed by using the wireless communication circuit may include a satellite navigation system communication frequency band, a cellular telephone communication frequency band, a wireless local area network communication frequency band, a near field communication frequency band, an ultra-wideband communication frequency band, or another wireless communication frequency band.

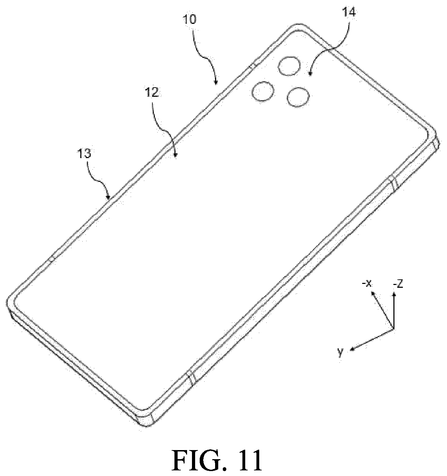

For example, as shown in FIG. 10 to FIG. 12, the electronic device 10 may have a display, and the display 11 may be installed on the front of the electronic device 10, as shown in FIG. 10. The display 11 may be a touchscreen incorporating capacitive touch electrodes or may be touch-insensitive. The electronic device 10 may include a housing, for example, a rear housing 12 in FIG. 10 and FIG. 11. A middle housing 13 is disposed between the rear housing 12 and the display 11. The middle housing 13 may be made of metal, and a plurality of breakpoints 15 are disposed on the middle housing 13.

In an embodiment, the electronic device 10 further includes a camera module.

In a case that the first open slot 17h1 of the first antenna unit 17a1, the second open slot 17h2 of the second antenna unit 17a2, and the third open slot 17h3 of the third antenna unit 17a3 in the ultra-wideband antenna array have the same opening orientation, openings face away from a side on which the camera module is located.

For example, as shown in FIG. 11 to FIG. 15, a plurality of camera modules 14 are disposed directly below the rear housing 12, and the openings of the antenna units of the ultra-wideband antenna array 17 face away from the camera modules, that is, the phase centers are kept away from the camera modules, thereby avoiding impact of the camera modules on antenna performance.

In an embodiment, the electronic device 10 further includes a housing and a mainboard disposed in the housing.

An antenna chip is disposed on the mainboard, and the ultra-wideband antenna array is electrically connected to the antenna chip.

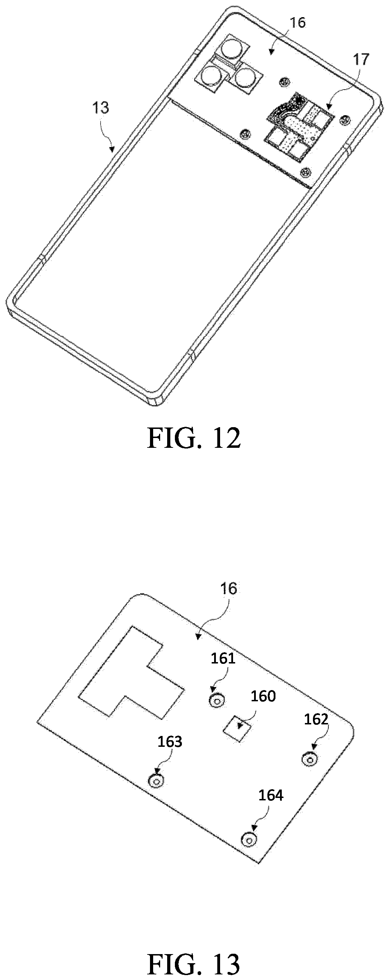

As shown in FIG. 12, after the rear housing 12 in FIG. 11 is hidden, a mainboard bracket 16 is disposed directly below the rear housing 12, and the foregoing ultra-wideband antenna array 17 is disposed on the mainboard bracket 16. The mainboard bracket 16 may be made of metal. An opening 160 is disposed in a middle region of the mainboard bracket 16, so that the UWB antenna is electrically connected to the mainboard 18 through the opening 160. A plurality of screw holes 161, 162, 163, and 164 are disposed in a peripheral region of the ultra-wideband antenna array 17. Screws are used in the screw holes to fasten the mainboard bracket 16 to the mainboard for grounding, to facilitate installation of the UWB antenna array.

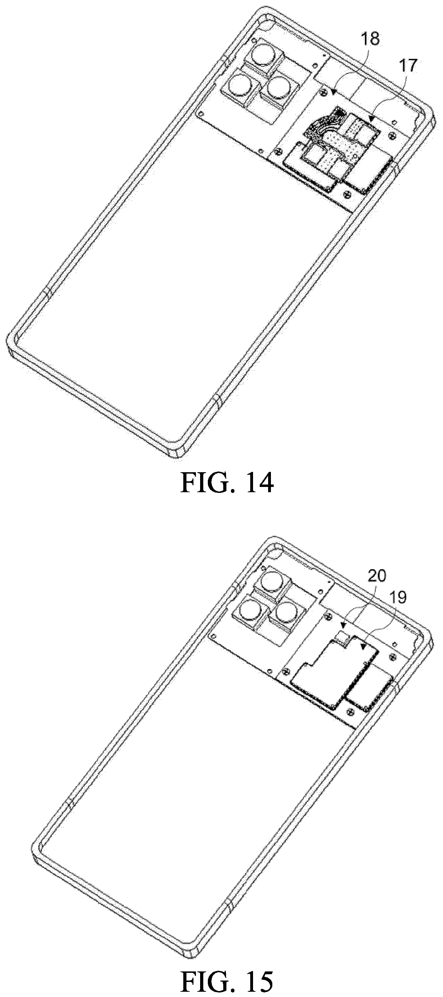

As shown in FIG. 14 and FIG. 15, after the mainboard bracket 16 is hidden, it can be seen that the mainboard 18 is disposed directly above (below the mainboard bracket 16) the middle housing 13. A shielding can 19 is disposed on the mainboard 18, and a BTB connector 20 is disposed on a side of the shielding can 19. A UWB chip is disposed on the mainboard, and the BTB connector 20 is configured to connect the UWB chip on the mainboard to the antenna units in the UWB antenna array.

It should be noted that, in this specification, the term "include", "comprise", or any other variation thereof is intended to cover a non-exclusive inclusion, so that a process, a method, an article, or an apparatus that includes a series of elements includes not only those elements, but also other elements not explicitly listed, or elements inherent to the process, the method, the article, or the apparatus. Without more limitations, an element defined by the phrase "including a ..." does not exclude the presence of another same element in a process, a method, an article, or an apparatus that includes the element. In addition, it should be noted that the scope of the methods and the apparatuses in the implementations of this application is not limited to performing functions in a shown or discussed order, and may further include performing functions in a basically simultaneous manner or in reverse order based on the involved functions. For example, the described methods may be performed in an order different from the described order, and various steps may be added, omitted, or combined. In addition, characteristics described with reference to some examples may be combined in other examples.

From the foregoing descriptions of the implementations, a person skilled in the art can clearly understand that the method in the embodiments may be implemented by software and a necessary universal hardware platform, and certainly may alternatively be implemented by hardware. However, in many cases, the former is a better implementation. Based on such an understanding, the technical solutions of this application essentially or the part contributing to the prior art may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

Embodiments of this application have been described above with reference to the accompanying drawings, but this application is not limited to the foregoing specific implementations. The foregoing specific implementations are merely examples instead of limitations. A person of ordinary skill in the art may make various variations under the teaching of this application without departing from the spirit of this application and the protection scope of the claims, and such variations shall all fall within the protection scope of this application.

**Claims**

1. An ultra-wideband antenna array, comprising a first antenna unit, a second antenna unit, and a third antenna unit, wherein a first distance and a second distance are less than a third distance, wherein the first distance is a distance between the first antenna unit and the third antenna unit, the second distance is a distance between the second antenna unit and the third antenna unit, and the third distance is a distance between the first antenna unit and the second antenna unit; and
phase centers of the first antenna unit, the second antenna unit, and the third antenna unit are deviated from geometric centers.

2. The ultra-wideband antenna array according to claim 1, wherein a phase center distance between at least two of the first antenna unit, the second antenna unit, and the third antenna unit is greater than a geometric center distance.

3. The ultra-wideband antenna array according to claim 1, wherein the first antenna unit has a first open slot, the second antenna unit has a second open slot, and the third antenna unit has a third open slot; and a first phase center of the first antenna unit is located at an end at which the bottom of the first open slot is located, a second phase center of the second antenna unit is located at an end at which the bottom of the second open slot is located, and a third phase center of the third antenna unit is located at an end at which the bottom of the third open slot is located.

**4.** The ultra-wideband antenna array according to claim 3, wherein an opening orientation of the second open slot is opposite to an opening orientation of the third open slot.

**5.** The ultra-wideband antenna array according to claim 3, wherein an opening orientation of the first open slot is opposite to an opening orientation of the third open slot.

**6.** The ultra-wideband antenna array according to claim 1, wherein the first antenna unit, the second antenna unit, and the third antenna unit each are a planar inverted F antenna radiated in a quarter-wave mode.

**7.** The ultra-wideband antenna array according to claim 6, wherein the first open slot of the first antenna unit, the second open slot of the second antenna unit, and the third open slot of the third antenna unit have the same opening orientation.

**8.** The ultra-wideband antenna array according to claim 1, wherein the ultra-wideband antenna array comprises a first structure layer, a second structure layer, and a third structure layer that are stacked in order, wherein

the first antenna unit, the second antenna unit, and the third antenna unit are disposed at the first structure layer;
feed signal cables of the first antenna unit, the second antenna unit, and the third antenna unit are disposed at the second structure layer, and orthographic projection positions of the first antenna unit, the second antenna unit, and the third antenna unit at the second structure layer are set to clearance; and
a reference metallic ground is disposed at the third structure layer.

**9.** The ultra-wideband antenna array according to claim 1, wherein a metallic ground is disposed between two adjacent antenna units of the first antenna unit, the second antenna unit, and the third antenna unit.

**10.** An electronic device, comprising the ultra-wideband antenna array according to any one of claims 1 to 9.

**11.** The electronic device according to claim 10, further comprising a camera module, wherein
in a case that the first open slot of the first antenna unit, the second open slot of the second antenna unit, and the third open slot of the third antenna unit in the ultra-wideband antenna array have the same opening orientation, openings face away from a side on which the camera module is located.

**12.** The electronic device according to claim 10, further comprising a housing and a mainboard disposed in the housing, wherein
an antenna chip is disposed on the mainboard, and the ultra-wideband antenna array is electrically connected to the antenna chip.

FIG. 1

FIG. 2

FIG. 3

FIG. 4

L2

17e3

17i1

17e3

17e2

17i3

17i3

## FIG. 5

L3

17f

17d

## FIG. 6

17h1

17g1

17a1

17g2

17g3

17a2

17a3

17h2

17h3

FIG. 7

17g1

17a1

17h1

17h3

17g2

17g3

17a2

C

17a3

17h2

FIG. 8

**FIG. 9**

**FIG. 10**

FIG. 11

FIG. 12

FIG. 13

FIG. 14

FIG. 15

<div align="center">

**INTERNATIONAL SEARCH REPORT**

</div>

| | International application No. |
|---|---|
| | **PCT/CN2023/085198** |

**A. CLASSIFICATION OF SUBJECT MATTER**

H01Q1/50(2006.01)i; H01Q5/50(2015.01)i; H01Q21/00(2006.01)i

According to International Patent Classification (IPC) or to both national classification and IPC

**B. FIELDS SEARCHED**

Minimum documentation searched (classification system followed by classification symbols)

IPC: H01Q

Documentation searched other than minimum documentation to the extent that such documents are included in the fields searched

Electronic data base consulted during the international search (name of data base and, where practicable, search terms used)

CNTXT; ENTXT; WPABS; DWPI; VEN; VCN; CNKI; IEEE: 超宽带, 天线, 几何, 中心, 相位, 距离; UWB, antenna, geometric, center, phase, distance

**C. DOCUMENTS CONSIDERED TO BE RELEVANT**

| Category* | Citation of document, with indication, where appropriate, of the relevant passages | Relevant to claim No. |
|---|---|---|
| Y | CN 113067151 A (GUANGDONG OPPO MOBILE COMMUNICATIONS CO., LTD.) 02 July 2021 (2021-07-02) <br> description, paragraphs 72-104, and figures 7-9 | 1-12 |
| Y | CN 111430920 A (SPREADTRUM COMMUNICATIONS (SHANGHAI) CO., LTD.) 17 July 2020 (2020-07-17) <br> description, paragraphs 46-64, and figures 1-7 | 1-12 |
| Y | US 2022094053 A1 (APPLE INC.) 24 March 2022 (2022-03-24) <br> description, paragraphs 83-112, and figures 1-9 | 1-12 |
| A | CN 114002677 A (HUAWEI TECHNOLOGIES CO., LTD.) 01 February 2022 (2022-02-01) <br> entire document | 1-12 |
| A | CN 113571881 A (JIANGSU JIAHUA COMMUNICATION TECHNOLOGY CO., LTD.) 29 October 2021 (2021-10-29) <br> entire document | 1-12 |
| PX | CN 114583447 A (VIVO COMMUNICATION TECHNOLOGY CO., LTD.) 03 June 2022 (2022-06-03) <br> description, paragraphs 27-81, figures 1-15, and claims 1-12 | 1-12 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 June 2023** | **20 June 2023** |

| Name and mailing address of the ISA/CN | Authorized officer |
|---|---|
| China National Intellectual Property Administration (ISA/CN) <br> China No. 6, Xitucheng Road, Jimenqiao, Haidian District, Beijing 100088 | |
| | Telephone No. |

Form PCT/ISA/210 (second sheet) (July 2022)

<div align="center">

17

</div>

**INTERNATIONAL SEARCH REPORT**
Information on patent family members

International application No.

**PCT/CN2023/085198**

| Patent document cited in search report | | | Publication date (day/month/year) | Patent family member(s) | Publication date (day/month/year) |
|---|---|---|---|---|---|
| CN | 113067151 | A | 02 July 2021 | None | |
| CN | 111430920 | A | 17 July 2020 | None | |
| US | 2022094053 | A1 | 24 March 2022 | None | |
| CN | 114002677 | A | 01 February 2022 | None | |
| CN | 113571881 | A | 29 October 2021 | None | |
| CN | 114583447 | A | 03 June 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210347408